**Europäisches Patentamt**

**European Patent Office**

**Office européen des brevets**

(19)

(11) Veröffentlichungsnummer : **0 212 494**
**B1**

(12) # EUROPÄISCHE PATENTSCHRIFT

(45) Veröffentlichungstag der Patentschrift :
03.01.90

(51) Int. Cl.⁵ : **B 01 D 53/04**

(21) Anmeldenummer : **86110980.9**

(22) Anmeldetag : **08.08.86**

(54) **Druckwechseladsorptionsverfahren.**

(30) Priorität : **12.08.85 DE 3528908**

(43) Veröffentlichungstag der Anmeldung :
**04.03.87 Patentblatt 87/10**

(45) Bekanntmachung des Hinweises auf die Patenterteilung : **03.01.90 Patentblatt 90/01**

(84) Benannte Vertragsstaaten :
**BE DE FR GB IT NL**

(56) Entgegenhaltungen :
**DE–A– 2 604 305**
**DE–A– 3 222 560**
**US–A– 4 070 164**
**US–A– 4 077 779**

(73) Patentinhaber : **Linde Aktiengesellschaft**
**Abraham-Lincoln-Strasse 21**
**D-6200 Wiesbaden (DE)**

(72) Erfinder : **Wiessner, Frank, Dipl.-Ing.**
**Varnhagenstrasse 3**
**D-8000 München 60 (DE)**
Erfinder : **Bolkart, Alfred, Dipl.-Ing.**
**Franz-Senn-Strasse 13**
**D-8000 München 70 (DE)**

(74) Vertreter : **Schaefer, Gerhard, Dr.**
**Linde Aktiengesellschaft Zentrale Patentabteilung**
**D-8023 Höllriegelskreuth (DE)**

EP 0 212 494 B1

## Beschreibung

Die Erfindung betrifft ein Adsorptionsverfahren nach dem Druckwechselprinzip zum Zerlegen eines Gasgemisches, das mindestens zwei unterschiedlich stark adsorbierbare Komponenten enthält, bei dem während einer unter erhöhtem Druck betriebenen Adsorptionsphase adsorbierbare Komponenten selektiv an einem Adsorptionsmittel adsorbiert und ein an den adsorbierten Komponenten verarmter Gasstrom gewonnen wird und im Anschluß an eine Adsorptionsphase eine Druckabsenkung auf einen niedrigeren Druck erfolgt, wonach das Adsorptionsmittel durch Überleiten eines Spülgases bei niedrigem Druck regeneriert und danach wieder auf erhöhten Druck gebracht wird.

Bei der Gaszerlegung durch Druckwechseladsorption wird die druckabhängige Adsorptionskapazität eines Adsorptionsmittels ausgenützt, indem bei einem relativ hohen Druck adsorbierbare Komponenten aus einem einen Adsorber durchströmenden Gasgemisch adsorbiert und während einer späteren Regenerierphase bei verringertem Druck wieder desorbiert werden. Zur Erleichterung bzw. Vervollständigung der Regeneration wird dabei im allgemeinen beim niedrigsten Verfahrensdruck ein Spülgas durch den Adsorber geführt, um dadurch den Partialdruck der zu desorbierenden Komponenten im Adsorber weiter abzusenken und desorbierte Anteile aus dem Adsorber auszuspülen. Bei einer solchen Verfahrensweise fällt neben dem Produktgas, das die nicht adsorbierbaren Anteile enthält, ein aus desorbierten Komponenten und Spülgas bestehendes Restgas an.

Es ist auch schon vorgeschlagen worden, neben dem nicht adsorbierten Produktgas auch die adsorbierten Komponenten in möglichst reiner Form zu gewinnen. Dabei wird gemäß einem aus der DE-OS 26 04 305 bekannten Verfahren ein mit adsorbierbaren Komponenten beladener Adsorber zunächst mit dieser Komponente weiter aufgesättigt, um noch im Adsorber verbliebenes nicht adsorbierbares Gas zu verdrängen, und anschließend werden durch Druckabsenkung, vorzugsweise auf unteratmosphärischen Druck, desorbierende Komponenten als Sekundärprodukt gewonnen. Um dieses Sekundärprodukt nicht zu verunreinigen, wird bei diesem Verfahren kein Spülgas eingesetzt.

Ein weiteres Verfahren zur gleichzeitigen Gewinnung nicht absorbierter und adsorbierter Komponenten ist aus der US-PS 4 077 779 bekannt. Dort wird ein Mehrkomponentengasgemisch, beispielsweise ein Wasserstoff-Kohlendioxid-Kohlenwasserstoff-Gemisch adsorptiv in mehreren parallel geschalteten Adsorbern aufgetrennt. Die Adsorber durchlaufen dabei zeitversetzt jeweils die nahfolgende Taktfolge. In der Adsorptionsphase wird bei erhöhtem Druck nicht adsorbiertes Produkt gewonnen. Danach erfolgt eine Gleichstromspülung bei nahezu Adsorptionsdruck, um einerseits Lückenvolumengas zu verdrängen und andererseits den Adsorber aufzusättigen. Als Spülgas wird dazu gewonnenes Adsorbatprodukt verwendet. Nach Aufsättigung des Adsorbers wird in der Desorption durch Druckabsenkung das Desorbat abgezogen, wobei ein Teil zur Gleichstromspülung herangezogen wird, während der Rest als Produkt gewonnen wird. Darauf folgen eine Spülung mit Fremdgas zur Reinigung des Adsorbers von nicht desorbierten Anteilen und eine anschließende Evakuierung zur Entfernung des Fremdgases und der Restverunreinigungen. Eine Wiederaufdrückphase mit nicht adsorbiertem Produkt aus der Adsorption beendet die Sequenz und die Taktfolge beginnt von neuem mit der Adsorption.

Dieses bekannte Verfahren unterscheidet sich wesentlich von dem der DE-OS 26 04 305 in der Gewinnung der adsorbierten Gasanteile. Anstelle der Gleichstromdruckminderung und anschließender Aufsättigung erfolgt eine sofortige Gleichstromspülung mit in Desorption gewonnenem Produkt, das zu diesem Zweck auf nahezu Adsorptionsdruck rückverdichtet werden muß. Bei Gasgemischen, die mit Komponenten unterschiedlicher Adsorptivität bietet diese Vorgehensweise außerdem nur die Möglichkeit einer befriedigenden Gewinnung der Komponente geringster Adsorbierbarkeit und der stärkster Adsorbierbarkeit.

Der Erfindung liegt die Aufgabe zugrunde, ein Verfahren der eingangs genannten Art so auszugestalten, daß neben einem Strom nicht adsorbierbarer Komponenten auch ein mit adsorbierbaren Komponenten angereicherter Strom gewonnen wird. Insbesondere liegt der Erfindung noch die weitergehende Aufgabe zugrunde, aus einem mindestens drei Komponenten enthaltenden Gasgemisch neben einem Strom nicht adsorbierbarer Komponenten auch einen mit einer stark adsorbierbaren Komponente angereicherten Strom zu gewinnen.

Diese Aufgabe wird dadurch gelöst, daß der Adsorber im Gleichstrom auf einen Zwischendruck entspannt wird, worauf bei dem Zwischendruck eine Spülung, im Gegenstrom zur Adsorptionsrichtung des Adsorbers mit einem Spülgas erfolgt, welches schwächer adsorbierbare Komponenten enthält, und während dieser Spülung vom Adsorbergas abgezogen wird, das mit stark adsorbierbaren Komponenten angereichert ist, und das nach Abschluß dieser Spülung unter Druck auf den niedrigsten Entspannungsdruck abgesenkt und ein Restgas aus dem Adsorber abgezogen wird.

Bei der erfindungsgemäßen Verfahrensweise wird die übliche Desorption eines beladenen Adsorbers gewissermaßen in zwei Teilschritte zerlegt, wobei in einem ersten Schritt bei einem über dem niedrigsten Verfahrensdruck liegenden Druck eine Teildesorption unter Gewinnung eines desorbatreichen Stroms erfolgt. Dieser erste Teilschritt wird vor der vollständigen Desorption abgebrochen und anschließend die Desorption durch weitere Druckabsenkung vervollständigt. Das erfindungsgemäße Verfahren hat nicht nur in vielen Fällen den Vorteil, daß ein desorbatreicher Strom unter erhöhtem Druck abgegeben werden kann, sondern erlaubt auch eine Gewinnung dieser Komponente in höherer Konzentration als bei der üblichen Spülung bei niedrigstem Verfahrensdruck.

In der Erfindung erfolgt die Spülung im Gegenstrom zur Adsorptionsrichtung, da dann das desorbierte Gas vom Eintrittsende des Adsorbers abgezogen werden kann, also von dem Ende, an dem die stärkste Beladung vorliegt.

Die Desorption des Adsorbers kann nach der Spülung beim Zwischendruck durch die weitere Druckabsenkung allein vervollständigt werden. Es ist jedoch auch möglich, diese Desorption durch eine weitere Spülung bei niedrigstem Verfahrensdruck zu ergänzen.

Bei Druckwechseladsorptionsverfahren ist es üblich, die Beladung eines Adsorbers zu unterbrechen, bevor die Adsorptionsfront das Austrittsende des Adsorbers erreicht hat. Dies hat den Vorteil, daß die nachfolgende Entspannung des Adsorbers teilweise im Gleichstrom erfolgen kann, wobei die Adsorptionsfront weiter zum Austrittsende fortschreitet, jedoch noch kein oder ein unbedeutender Durchbruch der Adsorptionsfront erfolgt. Bevor wesentliche Mengen an adsorbierbaren Komponenten aus dem Austrittsende des Adsorbers austreten, wird die Entspannung üblicherweise im Gegenstrom fortgesetzt. Bei Anwendung der Erfindung auf ein solches Verfahren ist es günstig, die erfindungsgemäße Spülung bei einem Zwischendruck nach Beendigung der Gleichstromentspannung und vor der Gegenstromentspannung durchzuführen. Der Zwischendruck liegt in typischer Weise wesentlich unter dem Adsorptionsdruck und näher am niedrigsten Verfahrensdruck als am Adsorptionsdruck. Typische Adsorptionsdrücke liegen im Bereich von 15 bis 30 bar, während der niedrigste Verfahrensdruck üblicherweise zwischen einem Grobvakuum von beispielsweise 50 Torr und 2 bar, insbesondere bei näherungsweise Atmosphärendruck liegt. Bei solchen Verfahren ist es günstig, den Zwischendruck etwa 1 bis 6 bar über dem niedrigsten Verfahrensdruck zu legen.

Zur Lösung der weitergehenden Aufgabe wird gemäß der Erfindung von einem mindestens drei unterschiedlich stark adsorbierbare Komponenten enthaltenden Gasgemisch ausgegangen, so daß nach Abschluß einer Adsorptionsphase mindestens zwei adsorbierbare Komponenten an das Adsorptionsmittel gebunden sind. Die Beladung des Adsorbers weist in einem solchen Fall zwei unterschiedliche Zonen auf, nämlich eine dem Eintrittsende des Adsorbers benachbarte Zone, in der die am stärksten adsorbierbare Komponente angereichert ist und eine daran anschließende Zone, in der die schwächer adsorbierbare Komponente angereichert ist. Bei einer derartigen Konstellation ist es erfindungsgemäß vorgesehen, daß während der beim Zwischendruck erfolgenden Spülung ein mit der am stärksten adsorbierbaren Komponente angereichertes Gas abgezogen wird. Die Spülung erfolgt dabei im Gegenstrom und wird zweckmäßig beendet, bevor wesentliche Anteile der schwächer adsorbierbaren Anteile aus dem Adsorber austreten.

Die im Anschluß an die Spülung erfolgende weitere Entspannung auf den niedrigsten Verfahrensdruck kann bei dieser Variante ebenfalls im Gegenstrom durchgeführt werden, in manchen Anwendungsfällen ist es jedoch auch günstig, sie im Gleichstrom vorzunehmen.

In einer besonderen Ausgestaltung der weiteren Entspannung erfolgt sie für den Teil des Adsorbers, der im wesentlichen mit der am stärksten adsorbierbaren Komponente beladen ist, im Gleichstrom und für den Teil des Adsorbers, der im wesentlichen mit einer weniger stark adsorbierbaren Komponente beladen ist, im Gegenstrom. Dies kann beispielsweise dadurch bewirkt werden, daß im Adsorber ein Mittelabgriff vorgesehen ist, der ungefähr in Höhe der Adsorptionsfront für die am stärksten adsorbierbare Komponente nach Beendigung einer Adsorptionsphase angeordnet ist. Zur Durchführung dieser Verfahrensvariante ist es auch möglich, den Adsorber in zwei hintereinander geschaltete Teiladsorber zu unterteilen, von denen der erste nach Abschluß einer Adsorptionsphase im wesentlichen nur mit der stärker adsorbierbaren Komponente und der zweite im wesentlichen nur mit der schwächer adsorbierbaren Komponente beladen ist. Bei einer solchen Unterteilung des Adsorptionsmittels auf zwei Behälter kann es jedoch auch günstig sein, im Anschluß an die Spülung nur den zweiten Behälter weiter auf den niedrigsten Verfahrensdruck zu entspannen, während der erste Behälter auf dem Zwischendruck verbleibt.

In einer speziellen Ausführungsform der Erfindung kann die Spülung beim Zwischendruck mit einem Spülgas erfolgen, das aus der schwächer adsorbierbaren Komponente besteht.

Es versteht sich von selbst, daß unter dem vorstehend häufig gebrauchten Begriff Komponente nicht immer nur eine einzelne Gaskomponente verstanden werden kann, sondern das es sich dabei gegebenenfalls auch um Gruppen einzelner Bestandteile handeln kann.

Das erfindungsgemäße Verfahren läßt sich bei einer Vielzahl von Zerlegungsprozessen einsetzen. Beispielsweise eignet es sich für die Gewinnung von Ammoniaksynthesegas aus einem Gemisch von Wasserstoff, Stickstoff und Kohlendioxid, wobei neben einem Wasserstoff/Stickstoff-Gemisch im für die Ammoniaksynthese geeigneten stöchiometrischen Verhältnis auch eine kohlendioxidreiche Fraktion gewonnen werden soll, oder für die Zerlegung von Raffineriegasen, die im wesentlichen Wasserstoff, leichte Kohlenwasserstoffe und höhere Kohlenwasserstoffe enthalten und bei denen neben einer wasserstoffreichen Fraktion auch eine heizwertreiche Fraktion höherer Kohlenwasserstoffe bei erhöhtem Druck gewonnen werden soll.

Die Erfindung ist nicht auf ein spezielles Ad-

sorptionsverfahren beschränkt, sondern läßt sich bei allen üblichen Adsorptionsverfahren mit einer beliebigen Anzahl von Adsorbern, beispielsweise zwischen 3 und 12 Adsorbern, anwenden.

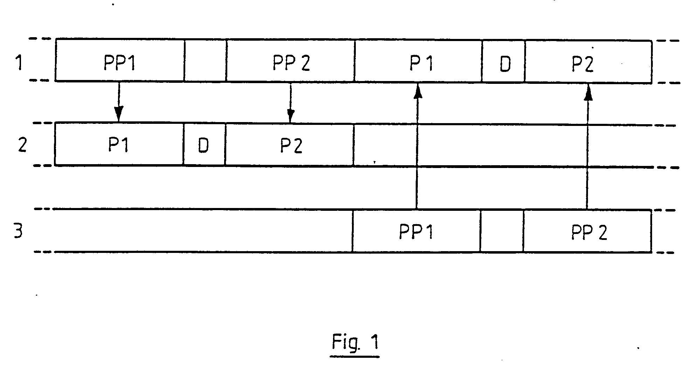

Weitere Einzelheiten der Erfindung werden nachfolgend anhand eines Beispiels und unter Verwendung der in den Figuren 1 und 2 schematisch angedeuteten Ausführungsbeispiels erläutert.

Ein aus drei Komponenten A, B und C bestehendes Gasgemisch wird in einer Druckwechseladsorptionsanlage so zerlegt, daß die am stärksten adsorbierbare Komponente C völlig adsorbiert und die schwächer adsorbierbare Komponente B teilweise adsorbiert wird und ein Produktstrom, der die am schwächsten adsorbierbare Komponente A sowie einen Teil der Komponente B enthält, während einer Adsorptionsphase vom Austrittsende eines Adsorbers abgezogen wird. Nach Beendigung einer Adsorptionsphase ist der dem Eintrittsbereich eines Adsorbers benachbarte Bereich mit der Komponente C und der nachfolgende Bereich wenigstens teilweise mit der Komponente B beladen. Die Komponente A ist daneben auch noch im Adsorber enthalten, jedoch im wesentlichen nur in den Hohlräumen zwischen den Partikeln des Adsorptionsmittels. Der beladene Adsorber wird nun zunächst im Gleichstrom von einem Adsorptionsdruck, beispielsweise 25 bar, entspannt, wobei ein die Komponenten A und B enthaltendes Entspannungsgas abgezogen wird. Das Gleichstromentspannungsgas wird während mehrerer Taktschritte abgezogen, wobei zunächst ein Druckausgleich mit gegebenenfalls mehreren, aufzudrückenden Adsorbern erfolgt und schließlich Entspannungsgas zum Spülen anderer Adsorber eingesetzt wird. Bei Erreichen des Enddruckes der Gleichstromentspannung, beispielsweise bei einem Druck von 4 bar, wird aus einem anderen, gerade eine Gleichstromentspannungsphase durchlaufenden Adsorber ein Spülgas in das Austrittsende des Adsorbers eingeleitet und vom Eintrittsende ein mit desorbierten Komponenten angereicherter Gasstrom abgezogen. Diese Spülung beim Zwischendruck wird so lange fortgeführt, bis der größte Teil der Komponente C aus dem Adsorber ausgespült ist, wonach eine Gegenstromentspannung des Adsorbers auf den tiefsten Verfahrensdruck, beispielsweise 1,5 bar erfolgt. Bei diesem Druck wird dann vorzugsweise eine weitere Spülung mit aus einem anderen Adsorber abgezogenem Entspannungsgas vorgenommen, wobei die Regenerierung des Adsorbers vervollständigt wird. Nach Beendigung der Spülung erfolgt das Aufdrücken des Adsorbers in üblicher Weise durch gegebenenfalls mehrstufigen Druckausgleich mit zu entspannenden Adsorbern sowie einem letzten Aufdrücken auf den Adsorptionsdruck durch Einleiten von Rohgas oder Produktgas.

Da die Komponente B ihrerseits vom Adsorptionsmittel adsorbiert wird, das durch Gleichstromentspannung anderer Adsorber gewonnene Spülgas aber einen relativ hohen Anteil an der Komponente B hat (der insbesondere bei abnehmendem Druck des das Entspannungsgas abgebenden Adsorbers zunimmt), ist es günstig, während der zweiten Spülung das mit desorbierten Komponenten beladene Spülgas aus dem mittleren Bereich des Adsorbers abzuziehen. Hierdurch wird vermieden, daß der zuvor bei der Zwischendruck-Spülung von der Komponente C weitgehend befreite Teil des Adsorbers in größerem Umfang mit der Komponente B beladen wird.

Die schematische Figur 1 ist ein Ausschnitt aus einem Taktschema für ein Adsorptionsverfahren mit einer zunächst beliebigen Anzahl von Adsorbern, wobei lediglich die erfindungswesentlichen Taktschritte dargestellt sind. Gemäß Figur 1 sind drei Adsorber an den erfindungsgemäßen Taktschritten beteiligt. Der Adsorber 1, der nach Beendigung einer Adsorptionsphase bereits einige Gleichstromentspannungsphasen durchlaufen haben kann, wird während eines Taktes PP1 mit einem Adsorber 2 verbunden, der gerade eine Spülphase P1 durchläuft. Nach Beendigung dieser Phase wird die Verbindung zwischen den Adsorbern unterbrochen und der Adsorber 2 im Gegenstrom zur Adsorptionsrichtung entspannt (D). Der Adsorber 1 kann während dieser Phase entweder eine weitere Gleichstromentspannungsphase durchlaufen oder auch in dem Zustand verharren, der zum Abschluß der Phase PP1 erreicht war. Dies hängt im Einzelnen von der Wahl des jeweiligen Adsorptionsverfahrens ab. Nachdem der Adsorber 2 seine Gegenstromspannungsphase D beendet hat, wird er wieder mit dem Adsorber 1 verbunden, der in einer weiteren Gleichstromentspannungsphase PP2 betrieben wird und Spülgas für den in einer beim tiefsten Verfahrensdruck betriebenen Spülphase P2 liefert. Während der Adsorber 2 nach Abschluß der Phase P2 in üblicher Weise wieder aufgedrückt wird, hat Adsorber 1 nach Abschluß der phase PP2 den Zwischendruck erreicht, bei dem eine erste Spülung mit Gleichstromspannungsgas aus dem Adsorber 3, der gerade eine Phase PP1 durchläuft, erfolgt. Im Anschluß daran wird der Adsorber 1 im Gegenstrom auf den niedrigsten Verfahrensdruck entspannt (D) · und dann mit weiterem Spülgas aus dem Adsorber 3, der dann seine Phase PP2 durchläuft, gespült (P2).

Während in diesem Beispiel beide Spültakte durch ein aus dem gleichen Adsorber anfallendes Gleichstromentspannungsgas bewirkt werden, ist es selbstverständlich auch möglich, das hierzu Entspannungsgase aus verschiedenen Adsorbern herangezogen werden.

## Patentansprüche

1. Adsorptionsverfahren nach dem Druckwechselprinzip zum Zerlegen eines Gasgemisches, das mindestens zwei unterschiedlich stark adsorbierbare Komponenten enthält, bei dem während einer unter erhöhtem Druck betriebenen Adsorptionsphase adsorbierbare Komponenten selektiv an einem Adsorptionsmittel adsorbiert und ein an den adsorbierten Komponenten verarmter Gasstrom gewonnen wird, und im Anschluß an eine Adsorptionsphase zur Desorption eine Druckabsenkung auf einen niedrigeren Druck erfolgt, indem der Adsorber im Gleichstrom auf einen Zwischendruck entspannt wird, worauf bei dem Zwischendruck eine Spülung im Gegenstrom zur Adsorptionsrichtung des Adsorbers mit einem Spülgas erfolgt, welches schwächer adsorbierbare Komponenten enthält, und während dieser Spülung vom Adsorber Gas abgezogen wird, das mit stark adsorbierbaren Komponenten angereichert ist, und nach Abschluß dieser Spülung der Druck auf den niedrigsten Entspannungsdruck abgesenkt und ein Restgas aus dem Adsorber abgezogen wird, wonach das Adsorptionsmittel durch Überleiten eines Spülgases bei niedrigerem Druck regeneriert und danach wieder auf erhöhten Druck gebracht wird.

2. Verfahren nach Anspruch 1, dadurch gekennzeichnet, daß das Gasgemisch mindestend drei unterschiedlich stark adsorbierbare Komponenten enthält und daß während der beim Zwischendruck erfolgenden Spülung ein mit der am stärksten adsorbierbaren Komponente angereichertes Gas abgezogen wird.

3. Verfahren nach Anspruch 2, dadurch gekennzeichnet, daß die Spülung beendet wird, bevorwesentliche Anteile der schwächer adsorbierbaren Anteile aus dem Adsorber austreten.

4. Verfahren nach Anspruch 3, dadurch gekennzeichnet, daß die nach Abschluß der Spülung erfolgende Entspannung im Gleichstrom geführt wird.

5. Verfahren nach Anspruch 4, dadurch gekennzeichnet, daß der Adsorber in zwei voneinander getrennten Behältern so unterteilt ist, daß nach Abschluß einer Adsorptionsphase der erste Behälter im wesentlichen mit der am stärksten adsorbierbaren Komponente beladen ist, und daß nach der Spülung nur der zweite Behälter weiter auf den niedrigsten Verfahrensdruck entspannt wird.

6. Verfahren nach einem der Ansprüche 2 bis 5, dadurch gekennzeichnet, daß die schwächer adsorbierbare Komponente des Gasgemisches als Spülgas verwendet wird.

## Claims

1. An adsorption process operating in accordance with the pressure-change principle for separating a gas mixture which contains at least two components which can be adsorbed to different extents, wherein during an adsorption phase which takes place at increased pressure adsorbable components are adsorbed selectively by an adsorbing agent and a gas stream depleted of the adsorbed components is obtained, and following an adsorption phase, for desorption a pressure reduction takes place to a lower pressure in that the adsorber is expanded in the cocurrent direction to an intermediate pressure, whereupon flushing is carried out at the intermediate pressure in counter flow to the adsorption direction of the adsorber using a flushing gas which contains more weakly adsorbable components, and during this flushing process gas enriched with strongly adsorbable components is drawn off from the adsorber and at the end of this flushing process the pressure is reduced to the lowest expansion pressure and a residual gas is drawn off from the adsorber, whereupon the adsorbing agent is regenerated by passing over a flushing gas at the lower pressure and is then returned to the increased pressure.

2. A process as claimed in Claim 1, characterised in that the gas mixture contains at least three components which can be adsorbed to different extents and that during the flushing which takes place at the intermediate pressure a gas enriched with the most strongly adsorbable component is drawn off.

3. A process as claimed in Claim 2, characterised in that the flushing is terminated before fundamental constituents of the more weakly adsorbable components escape from the adsorber.

4. A process as claimed in Claim 3, characterised in that the expansion which takes place at the end of the flushing is carried out in the cocurrent direction.

5. A process as claimed in Claim 4, characterised in that the adsorber is sub-divided into two separate containers in such manner that at the end of an adsorption phase the first container is fundamentally charged with the most strongly adsorbable component and that at the end of the flushing only the second container is further expanded to the lowest process pressure.

6. A process as claimed in one of the Claim 2 to 5, characterised in that the more weakly adsorbable component of the gas mixture is used as flushing gas.

## Revendications

1. Procédé d'adsorption selon le principe d'alternance de pression afin de fractionner un mélange gazeux qui contient au moins deux composants différents fortement adsorbables, dans lequel, pendant une phase d'adsorption réalisée sous pression élevée, des composants adsorbables sont adsorbés sélectivement par un agent d'adsorption et un courant de gaz appauvri des composants adsorbés est récupéré, et à la suite d'une phase d'adsorption, il se produit par désorption une baisse de pression jusqu'à une pression plus faible, pour laquelle l'adsorbant est détendu à co-courant jusqu'à une pression intermédiaire, pour laquelle on réalise un balayage à contrecourant par rapport à la direction d'adsorption de l'adsorbant à l'aide d'un gaz de balayage qui contient des composants faiblement adsorbables, et, pendant ce balayage, on extrait de l'adsorbant le gaz qui est enrichi en composants fortement adsorbables, et, après l'achèvement de ce balayage, la pression est détendue jusqu'à la pression de détente la plus faible, tandis que le gaz restant est extrait de l'adsorbant, l'agent d'adsorption étant ensuite régénéré, par passage d'un gaz de balayage à plus faible pression, et ramené à pression élevée.

2. Procédé selon la revendication 1, caractérisé en ce que le mélange gazeux contient au moins trois composants différents fortement adsorbables et en ce que, pendant le balayage réalisé à pression intermédiaire, on extrait un gaz enrichi des composants les plus adsorbables.

3. Procédé selon la revendication 2, caractérisé en ce que le balayage est terminé avant que des parties constituant les portions faiblement adsorbables n'aient quitté l'adsorbant.

4. Procédé selon la revendication 3, caractérisé en ce que la détente réalisée après l'achèvement du balayage est effectuée à co-courant.

5. Procédé selon la revendication 4, caractérisé en ce que l'adsorbant est réparti dans deux récipients séparés l'un de l'autre, de telle façon qu'après l'achèvement d'une phase d'adsorption, le premier récipient soit chargé essentiellement du composant le plus adsorbable et qu'après le balayage, seul le deuxième récipient soit soumis ultérieurement à une détente jusqu'à la plus faible pression régnant au cours du procédé.

6. Procédé selon l'une des revendications 2 à 5, caractérisé en ce que le composant le moins adsorbable du mélange gazeux est utilisé comme gaz de balayage.

Fig. 1